**Europäisches Patentamt**

**European Patent Office**

**Office européen des brevets**

(19)

(11) Veröffentlichungsnummer : **0 073 224 B1**

(12) **EUROPÄISCHE PATENTSCHRIFT**

(45) Veröffentlichungstag der Patentschrift :
**18.09.85**

(21) Anmeldenummer : **82900801.0**

(22) Anmeldetag : **03.03.82**

(86) Internationale Anmeldenummer :
**PCT/EP 82/00043**

(87) Internationale Veröffentlichungsnummer :
**WO/8203086 (16.09.82 Gazette 82/22)**

(51) Int. Cl.⁴ : **C 10 M113/08, C 10 M113/10,
C 10 M113/12// C10N40/06**

(54) PASTENARTIGES DÄMPFMEDIUM, VERFAHREN ZU SEINER HERSTELLUNG UND SEINE ANWENDUNG.

Verbunden mit 82101650.8 (europäische Anmeldenummer) durch Entscheidung von 27.09.83.

(30) Priorität : **03.03.81 DE 3107996**

(43) Veröffentlichungstag der Anmeldung :
**09.03.83 Patentblatt 83/10**

(45) Bekanntmachung des Hinweises auf die Patenterteilung : **18.09.85 Patentblatt 85/38**

(84) Benannte Vertragsstaaten :
**AT BE CH FR GB IT LI NL SE**

(56) Entgegenhaltungen :
**DE-A- 1 918 196**
**DE-A- 2 549 672**
**DE-A- 2 647 697**
**DE-A- 2 814 366**
**FR-A- 2 168 526**
**Die Akte enthält technische Angaben, die nach dem
Eingang der Anmeldung eingereicht wurden und die
nicht in dieser Patentschrift enthalten sind.**

(73) Patentinhaber : **AROS Hydraulik GmBH**
**Föhrenweg 7**
**D-8940 Memmingen (DE)**

(72) Erfinder : **LOCHNER, Kaspar**
**Karlsburger Strasse 61**
**D-8000 München 82 (DE)**
Erfinder : **SCHÜRMANN, Helmut**
**Christian-Hergl-Strasse 6**
**D-8060 Dachau (DE)**
Erfinder : **BRAND, Erich**
**Georgenstrasse 99**
**D-8000 München 40 (DE)**

(74) Vertreter : **Kressin, Horst-Rüdiger, Dr.**
**Patentanwälte WIEGAND NIEMANN KOHLER GLAE-
SER KRESSIN Herzog-Wilhelm-Strasse 16**
**D-8000 München 2 (DE)**

## Beschreibung

Die Erfindung betrifft ein pastenartiges Dämpfmedium zur Dämpfung mechanischer und/oder akustischer Schwingungen auf Basis einer Flüssigphase aus einem Siliconöl einer Viskosität von mindestens 20 mm²/s bei 25 °C, eines Polyglycols oder eines temperaturbeständigen, gesättigten, aliphatischen oder aromatischen Carbonsäureesters und gebenenfalls 0,1 bis 4 Gew.-% Antioxidationsmittel.

Dämpfmedien zur Dämpfung von mechanischen Schwingungen sind bekannt. Es sind zum Beispiel Hydrauliköle als Dämpfmedien vorgeschlagen worden. Diese Öle haben den Nachteil, dass die bei Dauerbelastung auftretende Erwärmung des Dämpfmediums nicht schnell genug abgeführt wird und die Öle überhitzt werden und aufschäumen oder sich zersetzen.

Es sind auch mit Härterzusätzen versehene Silikonöle als Dämpfmedien eingesetzt worden, die bei plötzlicher Belastung aufhärten. Derartige dilatante Dämpfmedien sind jedoch wegen der begrenzten Fliessfähigkeit nur für wenige spezielle Dämpfungsvorgänge einsetzbar. Die aufhärtenden Dämpfmedien haben auch den Nachteil, dass sie keine schalldämmende Wirkung besitzen.

Aus der US-PS-3 812 937 ist ein Dämpfmittel für hydraulisch wirkende Autopralldämpfer bekannt, das aus einem niedrig viskosen Petroleumöl besteht, das bis zu 20 Gew.-% eines organophilen Amin-Montmorillonits, das durch Umsetzung von Montmorillonit mit einem aliphatischen Aminsalz hergestellt wird, und Acetonnitril enthält.

Das bekannte Hydrauliköl ist ein aufgedicktes Öl, das jedoch nicht zum Dämpfen hochfrequenter Schwingungen und für Dauerbelastungen geeignet ist, da es nicht in der Lage ist, die bei der Umwandlung der Stoss- und/oder Zugbelastungen auftretende Wärme schnell genug abzuleiten. Bei Temperaturen um 82 °C tritt bereits eine Zersetzung des Petroleumöls ein, und die Viskosität des Dämpfmediums wird bereits bei Temperaturen von weniger als 82 °C erheblich herabgesetzt.

Die DE-A-2 647 697 betrifft eine Dämpfmittelpaste, die als feinverteilten Feststoff Graphit enthält. Daneben enthält die Paste noch geringfügige Zusätze zur Verbesserung der Benetzung des Graphits mit der Flüssigphase und eine kleine Menge Aluminiumsilikat oder amorphes Siliziumdioxyd als zusätzliches Mittel zur Stabilisierung des Strukturviskosität. Es ist außer Graphit kein anderer oder weiterer Füllstoff vorgesehen. Die Verwendung von Graphit als Feststoff ist unverzichtbar, da nur dieser Feststoff die bei Beanspruchung der Paste entstehende Wärme ausreichend schnell nach außen abführt. die gewünschten Schmiereigenschaften aufweist und ausreichend chemisch inert ist.

Die DE-A-2 814 366 betrifft eine spezielle Ausgestaltung der Dämpfmitteldispersion nach der DE-A-2 647 697. Sie betrifft die Verwendung eines speziellen wasserunlöslichen bzw. nur in sehr geringem Maße wasserlöslichen Polyglycoläthers oder Polyglycolesters anstelle des in der DE-A-2 647 697 offenbarten Polyglycoläthers als Flüssigphase. Als Feststoff wird feinverteilter Graphit verwendet. Die Offenbarung der DE-A-2 814 366 geht nicht über die Offenbarung der DE-A-2 647 697 hinaus, da sie keine zusätzlichen Informationen bezüglich des eingesetzten Feststoffs enthält.

Der Erfindung lag daher die Aufgabe zugrunde, ein Dämpfmedium zur Verfügung zu stellen, das aus billigen und gut zugänglichen Ausgangsmaterialien herstellbar ist, ohne daß dadurch die Temperaturstabilität der Viskosität des Dämpfmediums und damit die Fließfähigkeit des Dämpfmediums beeinträchtigt wird und wobei gleichzeitig eine höhere Lagerstabilität der Paste gewährleistet wird.

Die Aufgabe wird gelöst durch ein Dämpfmedium der eingangs angegebenen Art, das durch die Merkmale des Anspruchs 1 gekennzeichnet ist.

Überraschend wurde gefunden, daß der in bekannten Dämpfmedien als Feststoff verwendete Graphit durch einige ausgewählte andere Feststoffe ersetzbar ist. Der Zusatz der im Anspruch 1 aufgezählten Feststoffe hat den Vorteil, daß das Dämpfmedium durch die Auswahl des jeweiligen Feststoffs (Feststoffe) genau auf den gewünschten Dämpfungsvorgang bzw. das spezielle Dämpfelement eingestellt werden kann und daß die gewünschte Lagerstabilität und die gewünschte geringe Änderung der Viskosität über die Temperatur bei den erfindungsgemäßen Pasten erreicht wird. Dies liegt offenbar an einem synergistischen Zusammenwirken der speziellen Feststoffe mit den anderen Bestandteilen des Dämpfmediums in den bestimmten Mengenverhältnissen. Der synergistische Effekt beruht eventuell darauf, daß die aufgefundenen Feststoffe eine hohe spezifische Oberfläche und damit eine hohe Oberflächenaktivität besitzen. Das erfindungsgemäße Dämpfmedium weist eine besonders gute Stabilität der Viskosität über der Temperatur und eine gute Pastenstabilität bei der Lagerung und bei der Anwendung im Dämpfer auf. Bei den erfindungsgemäßen Dämpfmedien kommt es auch bei sehr langen Lagerzeiten und auch bei hohen Druckbelastungen nicht zur Abtrennung oder Ausfällung eines Mischungsbestandteiles. Bei der Verabreichung der hellen Farbstoffe entstehen keine Umweltprobleme, und die Verschmutzungsgefahr ist sehr viel geringer als bei der Verwendung von Graphit als Feststoff.

Sofern ein Siliconöl als Basismaterial für die Flüssigphase verwendet wird, beträgt die Viskosität des Siliconöls vorzugsweise wenigstens 100 bis 2 000 mm²/s, insbesondere 200 bis 1 000 mm²/s bei 25 °C. Besonders bevorzugt sind die Methyl- und/oder Methylenphenylpolysiloxane und die fluorierten Siliconöle. Bei der Verwendung von Siliconöl als Flüssigphase kann auf den Zusatz des Netzmittels und Strukturviskositätsmittels verzichtet werden. Zwischen dem Siliconöl mit geringer Oberflächenspannung und dem zugesetzten Feststoff mit hoher Oberflächenaktivität tritt offenbar ein besonderer zwischenpartikularer Effekt auf. Als Feststoffe sind hier insbesondere ZnS, $CaF_2$, Aluminiumphosphat, Aluminiumpolyphosphat und/oder Calciumphosphat geeignet.

Bei Verwendung von ZnS als Basisfeststoff im Gemisch mit einem der anderen obigen Feststoffe liegt das Verhältnis von ZnS zum anderen Feststoff im allgemeinen bei etwa 2 : 1. Die obigen Siliconpasten weisen bei Verwendung in Stoß- und Schwingungsdämpfern auch bei Dauerbelastung bei etwa 20 bis 150 °C einen etwa konstanten (linearen) Dämpfkraftverlauf auf.

Wenn ein Polyglycol als Basismaterial für die Flüssigphase verwendet wird, beträgt die Viskosität des Polyglycols vorzugsweise wenigstens 20 $mm^2/s$ bei 50 °C, insbesondere 20 bis 200 $mm^2/s$ bei 50 °C. Es werden bevorzugt Polyglycoläther und/oder -ester verwendet, die wasserunlöslich oder nur in sehr geringem Maße wasserlöslich sind. Bei Verwendung mittelviskoser Polyglycoläther bzw. Polyglycoläthergemische beträgt die Viskosität ca. 70 bis 90 $mm^2/s$, insbesondere ca. 80 $mm^2/s$, bei 50 °C. Bei der Verwendung hochviskoser Polyglycoläther bzw. Polyalkylenglycoläther beträgt die Viskosität ca. 170 bis 200 $mm^2/s$, insbesondere 180 $mm^2/s$ bei 50 °C. Ein bevorzugt verwendeter Polyalkylenglycoläther ist zum Beispiel der Polyglycoläther LB 1 800 (Unioncarbide). Die erfindungsgemäss verwendeten Polyglycole besitzen einen Stockpunkt zwischen ca. − 50 °C und 0 °C, insbesondere zwischen − 40 °C und − 10 °C, und weisen ein relatives mittleres Molekulargewicht von ca. 700 bis 20 000, insbesondere ca. 1 100 bis 3 800 auf. Besonders bevorzugt sind Polyglycole mit einem mittleren Molekulargewicht von ca. 1 100 bis 2 300.

Es können aber auch hydrophile Polyäthylen-, Polypropylen- und Polybuthylenglycole und Gemische davon, als auch verzweigte Polyglycole und Polyglycole, die sich vom Glyzerin ableiten, eingesetzt werden,

Geeignete Polyglycoläther sind zum Beispiel die Polyäthylenglycolmonoäthyläther, -propyläther, -butyläther und -pentyläther, die Polypropylenglycolmonomethyläther, -äthyläther, -propyläther, -butyläther und -pentyläther und die Polybutylen-glycolmonomethyläther, -äthyläther, -propyläther, -butyläther, -pentyläther und -hexyläther und die Gemische davon.

Weiterhin sind auch die Monoester der Polyglycole einsetzbar, insbesondere die Monoester und Diester der Stearin-, Öl- und Laurinsäure dere obigen Polyglycole.

Als Flüssigphase kann auch ein gesättigter, aliphatischer Ester, zum Beispiel der Ester eines gesättigten, aliphatischen einwertigen oder mehrwertigen $C_5$-$C_{12}$-Alkohols mit gesättigten aliphatischen $C_5$-$C_{12}$-Monocarbonsäuren eingesetzt werden. Besonders gevorzugt sind die Di- und Triester gesättigter aliphatischer Carbonsäureester. Bei den aromatischen Diestern sind die Ester aus aliphatischen, gesättigten ein- oder mehrwertigen $C_5$-$C_{12}$-Alkoholen mit Phthal-, Terphthal- und Isophthalsäure geeignet. Bei den aromatischen Triestern sind die Ester aus den aliphatischen, gesättigten ein- oder mehrwertigen $C_5$-$C_{12}$-Alkoholen mit Benzoltricarbonsäure einsetzbar. Besonders geeignet sind zum Beispiel die folgenden Ester :

Ester des Pentaerythrits, des Trimethylolpropans und des Trimethylpropanols mit einfachen bzw. verzweigten $C_5$-$C_{12}$-Carbonsäuren, die Ester der Adipinsäure, wie Adipinsäure-octyldecylester und deren Derivate, die Ester der Glutar- und/oder Pimelinsäure, die Ester der Phthalsäure, wie Diäthylhexylphthalat, Dioctylphthalat, Diisotridecylphthalat, Didecylphthalat, Ester der Trimellitsäure, Trimesinsäure und/oder Hemimellitsäure, zum Beispiel Tridecyl- und Trioctylester der Trimellitsäure.

Die Feststoffe liegen in einer Menge von 20 bis 80 Gew.-%, vorzugsweise 30 bis 70 Gew.-%, bezogen auf das Gesamtgewicht des Dämpfmediums, vor. Bei einer Füllstoffmenge von weniger als 20 Gew.-% wird das Dämpfmedium zu dünnflüssig, so dass es kaum als wirksames Dämpfmedium einsetzbar ist. Bei der Verwendung von mehr als 80 Gew.-% Füllstoffen entsteht eine Masse, die bereits so fest ist, dass die Fliessfähigkeit beeinträchtigt ist. Der bevorzugte Bereich der Feststoffzusätze liegt bei etwa 30 bis 60 Gew.-%, bezogen auf das Gesamtgewicht des Dämpfmediums.

Als Feststoffe sind feinverteilte Feststoffe geeignet, die sich günstig auf die Strukturviskosität des Dämpfmediums auswirken, wie Aluminiumoxid, Aluminiumphosphat, Aluminiumpolyphosphat, Aluminiumsilicat, Kryolith, Magnesiumsilicat, Magnesiumaluminiumsilicat, Molybdänsulfid, Zinksulfid und/oder Zinkpyrophosphat. Ein besonders geeigneter Feststoff ist ZnS, gegebenenfalls in Kombination mit $AlPO_4$, $Al_5(P_3O_{10})_3$ oder $CaF_2$.

Die hellen Feststoffe weisen eine Teilchengröße von 80 % höchstens 10 μm auf. Der bevorzugte Teilchengrößenbereich der Feststoffe liegt bei 80 % < 5 μm, insbesondere 80 % < 3 μm. Die feine Verteilung der Feststoffteilchen ist ein wesentliches Merkmal der erfindungsgemäßen Paste, da sie neben den anderen Faktoren zur kolloidalen Stabilität der Paste beiträgt.

Die vorteilhafte Verwendung der hellen Füllstoffe wird nachfolgend anhand der wichtigsten Füllstoffe näher erläutert :

ZnS und $CaF_2$ besitzen eine gute Schmierfähigkeit und gute Temperaturstabilität, so dass auch das damit hergestellte erfindungsgemässe Dämpfmedium eine entsprechend gute Schmierfähigkeit und gute Temperaturstabilität aufweist.

Die Verwendung von Aluminiumoxid erhöht die Temperaturstabilität des Dämpfmediums. Durch den Einsatz von Zinksulfid als Feststoff kann die Druckbeständigkeit des erfindungsgemässen Dämpfmediums erhöht werden, und ausserdem wird dadurch die Dispergierbarkeit der Feststoffe verbessert. Dies ist insbesondere dann wichtig, wenn ein Feststoffgemisch verwendet wird.

Molybdänsulfid wird insbesondere als Zusatzstoff verwendet, wenn die Schmierfähigkeit des Dämpfmediums und ggf. die Dispergierbarkeit der Feststoffe verbessert werden soll. Bereits kleine Mengen an Molybdänsulfid verbessern die Schmierfähigkeit des Dämpfmediums wirksam. Molybdänsulfid wird insbesondere in Kombination mit Aluminiumoxid, CaF, ZnS oder Kryolith verwendet.

Titanoxid wird insbesondere dann verwendet, wenn eine hohe Aufhellung des Dämpfmediums und ein inertes Verhalten gegenüber Gummiteilen gewünscht wird. Die Reinheit des Titandioxids sollte vorzugsweise wenigstens 99 % betragen.

Die erfindungsgemäßen pastenartigen Dämpfmedien besitzen eine Viskosität von etwa 100 000 bis $4 \times 10^6$ mPa s, insbesondere von etwa 150 000 bis $3 \times 10^6$ mPa s bei 18 °C.

Nach einer Ausgestaltung der Erfindung können die Feststoffe auch oberflächenbehandelt sein. Ein Teil der verwendeten Feststoffe wird vorzugsweise in silanisierter Form verwendet.

Die Netzmittel bzw. Mittel zur Erhöhung der Grenzflächenaktivität werden insbesondere zu 0,5-2 Gew.-%, bezogen auf das Gesamtgewicht des Dämpfmediums, eingesetzt, wobei insbesondere Aminsalze der Ölsäure, Linolsäure, Palmitinsäure, und/oder Stearinsäure eingesetzt werden. Besonders wirksame Netzmittel sind auch die Perfluoralkylgruppen enthaltenden organischen Verbindungen, zum Beispiel das fluorierte Alkylpolyoxyäthylenäthanol. Geeignete Netzmittel sind auch Talgfettsäurediamine, Kokosfettsäurediamine, Naphthalinsulfonate, Alkylarylsulfonate, insbesondere Alkylbenzolsulfonate, Fettalkoholpolyglycoläther und äthoxilierte Acetylenalkohole. Die Netzmittel haben die Aufgabe, die Benetzung der eingesetzten Feststoffe mit der Flüssigphase zu verbessern. Bei der Verwendung von Siliconöl als Flüssigphase ist, die Verwendung eines Netzmittels im allgemeinen nicht nötig. Das schließt nicht aus, daß spezielle Netzmittel gegebenenfalls zusätzlich eingesetzt werden können, da eine generelle Unverträglichkeit mit Siliconölen nicht gegeben ist.

Zur Erhöhung der Strukturviskosität bzw. zur Stabilisierung der Strukturviskosität enthält das erfindungsgemäße Dämpfmedium vorzugsweise 1 bis 7, insbesondere 2 bis 4 Gew.-%, Ca- und Na-Bentonite.

Das Benthonit wird vorzugsweise in Anwesenheit eines Aktivators, wie Propylencarbonat, Aceton oder Acetonitril verarbeitet. Die Korngröße des eingesetzten Viskositätsstabilisators liegt bei höchstens 0,5 μm, insbesondere bei 0,1 μm. Bei Verwendung von Siliconöl als Flüssigphase und Siliciumdioxid oder einem der anderen Feststoffe ist der Zusatz eines Mittels zur Verbesserung der Strukturviskosität nicht nötig.

Zur Stabilisierung der Flüssigphase gegen Oxidationen bei erhöhten Temperaturen enthält das erfindungsgemäße Dämpfmedium, das Ester oder Glycole als Flüssigphase enthält, 0,1 bis 4, vorzugsweise 0,5 bis 3 Gew.-% eines Antioxidationsmittels, bezogen auf das Gesamtgewicht des Dämpfmediums. Geeignete Antioxidationsmittel sind z. B. Phenol- und Thiophenolverbindungen, wie sie in Ullmann's Enzyklopädie, 15. Band, Seiten 217 bis 220 beschrieben sind. Besonders geeignet sind z. B. sterich gehinderte Amino- und Phenolderivate, z. B. Diphenylamin, Phenyl- -naphthylamin, Thiophenylamin, Alkylphenole, Di-tertiär-butyl-p-kresol oder Trimethyldiheterochinolin.

Bei der Verwendung von Carbonsäureestern als Flüssigphase kann es von Vorteil sein, einen polymeren Viskositätsverbesserer zur Verbesserung des Viskositätsindex und zur Einstellung der Viskosität der Flüssigkeit zuzusetzen. Hierbei handelt es sich um Polymerisate, die in den gesättigten, aliphatischen oder aromatischen Carbonsäureestern löslich, teilweise löslich oder wenigstens sehr gut verteilbar sind. Geeignete Viskositätsverbesserer für der erfindungsgemäßen Dämpfmedien sind z. B. Polyisobutylene, Polymethacrylate, Polybutadiene, Polybutene, Polypropylene, Polyäthylene und/oder Polystyrole.

Die obengenannten Viskositätsverbesserer werden vorzugsweise in einer Menge von 0,5 bis 5, insbesondere 0,5 bis 2 Gew.-%, bezogen auf das Gesamtgewicht des Dämpfmediums eingesetzt.

Bei der Verwendung von Polyglycolen oder Silikonölen als Flüssigphase ist die Verwendung eines Viskositätsverbesserers im allgemeinen nicht notwendig, da diese Verbindungen in entsprechenden Viskositätsbereichen zur Verfügung stehen. Es ist jedoch nicht ausgeschlossen, für besondere Anwendungsfälle auch bei der Verwendung dieser Verbindungen zusätzlich Viskositätsverbesserer einzusetzen.

Auch in diesem Fall werden die Viskositätsverbesserer in einer Menge von etwa 0,5 bis 5, insbesondere 0,5 bis 2 Gew.-%, bezogen auf das Gesamtgewicht des Dämpfmediums verwendet.

Die erfindungsgemäßen Dämpfmedium werden dadurch hergestellt, daß man die Flüssigphase vorlegt und diese ggf. mit dem Netzmittel und gegebenenfalls dem Antioxidationsmittel vermischt. Danach wird das Mittel zur Stabilisierung der Strukturviskosität, wo es benötigt wird, bei 40 bis 100 °C, vorzugsweise 60 bis 80 °C, eingemischt, und zwar so lange, bis eine homogene Verteilung erreicht ist. Danach werden die Feststoffe in kleinen Anteilen hinzugegeben. Beim Vermischen der Füllstoffe wird die Temperatur vorzugsweise auf etwa 60 bis 80 °C eingestellt. Das Verrühren bzw. Vermischen kann auch unter einem gleichzeitigen Vermahlen vorgenommen werden, falls die eingebrachten Feststoffe nicht fein genug verteilt sind. Das Verrühren bzw. Vermahlen des Dämpfmediums erfolgt vorzugsweise unter Vakuum, um das Einrühren von Luft in das Dämpfmedium zu verhindern. Geeignete Rührvorrichtungen sind z. B. wirksame Dispergiermaschinen und Knetmaschinen, wie Doppelkneter, Dreiwalzenmühlen und Planetmischer. Die Mischzeit beträgt je nach der Mischwirksamkeit des Rührers etwa 20 bis 120 min. Es wird eine homogene, lagerstabile Paste erhalten. Auch bei Lagerzeiten von mehreren Monaten kommt es nicht zum Absetzen der Feststoffe bzw. eines Feststoffs.

Die erfindungsgemäßen Dämpfmedien sind für hydraulisch wirkende Dämpfervorrichtungen geeignet, insbesondere als Medien für Motorlager, Raddämpfer, Pralldämpfer, Lenkungsdämpfer, Stoßdämpfer, Vorrichtungen für Schienenfahrzeuge und Flugzeuge, Schwingungsdämpfer aller Art, Sitzdämpfer und für die schwingungsfreie Lagerung von Maschinen.

Die Erfindung wird durch die folgenden Beispiele näher erläutert.

## Beispiel 1

Es wurde eine homogene Paste hergestellt, indem ein Siliconöl einer bestimmten Viskosität vorgelegt wurde, in das dann die Feststoffe sorgfältig eingerührt bzw. eingeknetet wurden. Die Zusammensetzung des Dämpfmediums ist nachfolgend zusammengefaßt:

|  | Gew.-% |
|---|---|
| Dimethylpolysiloxan (Viskosität 350 m²/s) | 31,5 |
| ZnS (Teilchengröße < 2 μm) | 42,0 |
| CaF2 (Teilchengröße < 2 μm) | 26,5 |
| Penetration (DIN 51 804): | 260 bis 280-0,1 mm |
| Ölabscheidung (DIN 51 817 | |
| aber bei Erwärmung über 24 h auf 100 °C): | 0,2 Gew.-% |

## Beispiel 2

Nach dem in Beispiel 1 beschriebenen Verfahren wurde ein Dämpfmedium mit der folgenden Zusammensetzung und den nachstehend angegebenen Eigenschaften hergestellt:

|  | Gew.-% |
|---|---|
| Dimethylpolysiloxan (Viskosität 350 m²/s) | 40,4 |
| ZnS (Teilchengröße < 2 μm) | 38,5 |
| Aluminiumphosphat (AlPO$_4$-2H$_2$O) | |
| mit hoher spezifischer Oberfläche | 21,1 |
| Penetration (DIN 51 804): | 260 bis 280.0,1 mm |
| Ölabscheidung (DIN 51 817 | |
| aber bei Erwärmung über 24 h auf 100 °C): | 0,2 Gew.-% |

## Anwendungsbeispiel

Das erfindungsgemäße Dämpfmedium wurde in einen hydraulisch wirkenden Pralldämpfer eingefüllt, der aus zwei konzentrischen Rohren bestand, wobei das Innenrohr den Kolben und das Außenrohr den Zylinder bildete. Das Innenrohr enthält eine Stickstoff-Füllung, die durch einen Trennkolben von dem dahinter liegenden Kolbenboden abgehalten wird. Der Kolbenboden ist mit einer Bohrung versehen. Das Dämpfmedium befindet sich im Zylinderraum hinter dem Kolbenboden und dringt durch die Bohrung in das Innenrohr ein, wenn dieses beim Aufprall in das Außenrohr gedrückt wird. Das Dämpfmedium drückt dabei den Trennkolben zurück und komprimiert die eingeschlossene Gasfüllung. Die Federkraft des Gases sorgt nach Beendigung des Aufpralls für die Rückstellung der beiden Rohre in die Ausgangslage. In die Bohrung im Boden des Kolbens ragt ein Steuerstift hinein. Der Steuerstift besitzt eine kegelige Form, die jedoch in Stufen von etwa 1/10 mm erreicht wird. Je weiter der Stift in die Bohrung eindringt, um so geringer wird der Spalt, der dem Dämpfungsmedium zum Druchströmen zur Verfügung steht. Dadurch kann gegen Ende des Dämpferweges ein gezielter Kraftantieg erreicht werden.

Bedingt durch die Viskosität des erfindungsgemäßen Dämpfmediums ist es möglich, die Toleranzen bei der Dämpfervorrichtung größer zu halten als dies bei üblichen Seriendämpfern mit Hydrauliköl der Fall ist. Das dämpfmedium schäumt bei hohen Druckdifferenzen nicht auf und besitzt einen Flammpunkt von mehr als 300 °C.

Der Pralldämpfer wurde an der Vorderfront eines Kraftfahrzeuges mit einem Gewicht von 475 kg befestigt.

Zur Bestimmung des Kompressionsweges war ein induktiver Wegaufnehmer fest am Fahrzeug befestigt und mit der Spitze des Pralldämpfers verbunden. Zusätzlich wurde am Fahrzeug ein Beschleunigungsaufnehmer angebracht, der die Fahrzeugverzögerung erfaßte. Es wurden mehrere Aufprallversuche unter folgenden Versuchsbedingungen durchgeführt:

Fahrzeugmasse 450 kg und Aufprallgeschwindigkeit 5,3 km/h
Fahrzeugmasse 475 kg und Aufprallgeschwindigkeit 7,9 km/h

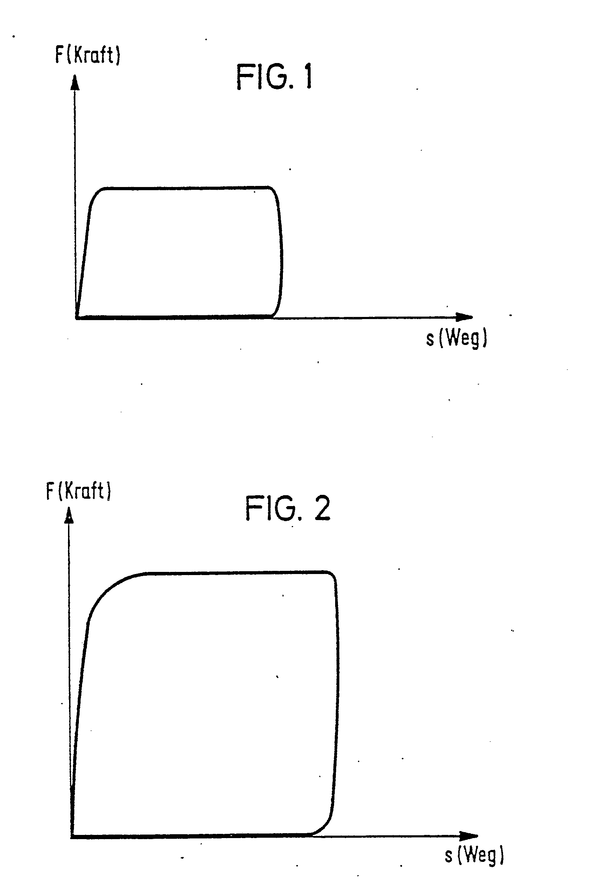

Das Kraft-Weg-Diagramm für die obigen Aufprallversuche zeigt eine nahezu rechtwinklige Form und damit ein optimales Dämpfungsverhalten. Die gesamte Bewegungsenergie des Fahrzeugs wird vom Dämpfer aufgenommen, und der zur Verfügung stehende Weg (Hub) wird optimal genutzt (vergl. Figur 1 und 2). Die Figur 1 zeigt das Kraft-Weg-Diagramm für den Aufprallversuch mit einer Last von 450 kg bei 5,3 km/h und die Figur 2 zeigt den Aufprallversuch mit einer Last von 475 kg bei 7,9 km/h.

Auch bei einer Aufprallgeschwindigkeit von 10 km/h kommt es zu keinem Durchschlagen des Dämpfers. Die Fahrzeugverzögerung (Fahrzeugmasse 500 kg) liegt bei 9,8 g und damit weit unterhalb der Verzögerung, die mit üblichen Pralldämpfern, die mit Hydraulikölen gefüllt sind, erreicht wird. Die Energieaufnahme ist bei dem mit dem erfindungsgemäßen Dämpfmedium gefüllten Pralldämpfer also wesentlich größer als bei den üblichen Pralldämpfern.

Während bei den üblichen Pralldämpfern, die mit Hydraulikölen gefüllt sind, nur ein Teil der Aufprallenergie umgewandelt wird und der verbleibende Rest wie eine Feder gespeichert wird, die das Fahrzeug dann anschließend zurückschleudert, wird bei den mit den erfindungsgemäßen Dämpmedien gefüllten Pralldämpfern praktisch die gesamte kinetische Energie beim Aufprall abgebaut. Ein Rückprall des Fahrzeugs kommt nicht zustande.

## Patentansprüche

1. Pastenartiges Dämpfmedium zur Dämpfung mechanischer und/oder akustischer Schwingungen auf Basis einer Flüssigphase aus einem Siliconöl, einer Viskosität von mindestens 20 $mm^2$/s bei 25 °C, eines Polyglycols oder eines temperaturbeständigen, gesättigten, aliphatischen oder aromatischen Carbonsäureesters und gegebenenfalls 0,1 bis 4 Gew.-% Antioxidationsmittel, dadurch gekennzeichnet, daß es 20 bis 80 Gew.-% Aluminiumoxid, -silicat, -hydroxid, -phosphat, -polyphosphat, Kryolith, Calciumphosphat, Calciumfluorid, Magnesiumoxid, Magnesium- silicat, -aluminiumsilicat, Molybdänsulfid, Siliciumdioxid, Sillimanit, Titandioxid, Zinksulfid, Kaolin und/oder Zinkpyrophosphat einer Teilchengröße von 80 % < 10 µm, bezogen auf das Gesamtgewicht des Dämpfmediums, als feinverteilten Feststoff enthält.

2. Dämpfmedium nach Anspruch 1, dadurch gekennzeichnet, daß der Feststoff bzw. das Feststoffgemisch in einer Menge von 30 bis 70 Gew.-%, bezogen auf das Gesamtgewicht des Dämpfmediums, vorliegt.

3. Dämpfmedium nach Anspruch 1 oder 2, dadurch gekennzeichnet, daß die Teilchengröße der Feststoffe bei 80 % < 5 µm, insbesondere bei 80 % < 3 µm, liegt.

4. Dämpfmedium nach Anspruch 1, dadurch gekennzeichnet, daß es zusätzlich etwa 0,1 bis 4 Gew.-% Netzmittel bezogen auf das Gesamtgewicht des Dämpfmediums, enthält.

5. Dämpfmedium nach Anspruch 1 oder 4, dadurch gekennzeichnet, daß es 0,5 bis 2 Gew.-% Netzmittel bzw. Mittel zur Erhöhung der Grenzflächenaktivität enthält, wobei das Netzmittel insbesondere ein Aminsalz der Ölsäure, Linolsäure, Palmitinsäure und/oder Stearinsäure, Talgfettsäurediamine, Kokosfettsäurediamine, Naphthalinsulfonate, Alkylarylsulfonate, Fettalkoholpolyglycoläther, äthoxylierte Acetylenalkohole, Perfluoralkylgruppen enthaltende Alkylverbindungen, fluorierter Alkylpolyoxyäthylenäthanol, Kaliumfluoralkylcarboxylat und/oder fluoriertes Alkylammoniumjodid ist.

6. Dämpfmedium nach Anspruch 1 oder 2, dadurch gekennzeichnet, daß es 0,5 bis 3 Gew.-%, bezogen auf das Gesamtgewicht des Dämpfmediums sterisch gehindertes Alkylphenol, Thiophenol oder Dialkylselenid, Diphenylamin, Phenyl-α-naphtahylamin, Methylen-4,4'-bis-(2,6-di-tert. -butyl-phenol), Thiophenylamin, Di-tert. -butyl-p-kresol oder Trimethyldiheterochinolin als Antioxidationsmittel für die Polyglykole oder Carbonsäureester enthält.

7. Dämpfmedium nach einem der Ansprüche 1 bis 6, dadurch gekennzeichnet, daß es 0,5 bis 5 Gew.-% eines polymeren Viskositätsverbesserers als zusätzliches Additiv, bezogen auf das Gesamtgewicht des Dämpfmediums, enthält, wobei der Viskositätsverbesserer insbesondere ein Polyisobutylen, Polymethacrylat, Polybuten, -butadien, Polyäthylen, Polypropylen und/oder Polystyrol oder Polytetrafluorethylen ist.

8. Verfahren zur Herstellung des Dämpfmediums nach einem der Ansprüche 1 bis 7, dadurch gekennzeichnet, daß man die Flüssigphase bei Temperaturen von 40 °C bis 100 °C, insbesondere 60 °C bis 80 °C, gegebenenfalls mit dem Netzmittel und gegebenenfalls mit dem Antioxidationsmittel vermischt und anquellen läßt und dann die Feststoff-Füllstoffe in kleinen Anteilen zumischt, bis man eine homogene Paste erhält.

9. Verwendung des Dämpfmediums nach einem der Ansprüche 1 bis 7 in Pralldämpfern, Raddämpfern, Lenkungsdämpfern, Sitzdämpfern, Motordämpfern, Maschinenlagerungsdämpfern, Industriestoßdämpfern oder Industrieschwingungsdämpfern.

## Claims

1. A pasty damping medium for damping mechanical and/or acoustic vibrations on basis of a liquid phase comprising a silicone oil having a viscosity of at least 20 $mm^2$/s at 25 °C, a polyglycol or a saturated aliphatic or aromatic carboxylic acid ester stable to temperature fluctuation, and optionally 0,1 to 4 % by weight of an antioxidant, characterized in that it contains as finely divided solid 20 to 80 % by weight, based on the total weight of the damping medium, of alumina, aluminium silicate, aluminium hydroxide, aluminium phosphate, aluminium polyphosphate, cryolite, calcium phosphate, calcium fluoride, magnesium oxide, magnesium silicate, magnesium aluminium silicate, molybdenum sulfide, silica, sillimanite, titanium dioxide, zinc sulfide, kaolin and/or zinc pyrophosphate having a particle size of 80 % < 10 $\mu$m.

2. Damping medium according to claim 1, characterized in that the solid or mixture of solids makes up to 30 to 70 % by weight of the damping medium, based on the total weight of the damping medium.

3. Damping medium according to claim 1 or claim 2, characterized in that the particle size of 80 % of the solids is < 5 $\mu$m, particularly 80 % of the solids is < 3 $\mu$m.

4. Damping medium according to claim 1, characterized in that it additionally contains approximately 0,1 to 4 % by weight, based on the total weight of the damping medium, of a wetting agent.

5. Damping medium according to claims 1 or 4, characterized in that it contains 0,5 to 2 % by weight of wetting agent or agent for improving the interfacial activity, respectively, the wetting agent being in particular an amino salt of oleic acid, linoleic acid, palmitic acid and/or stearic acid, tallow fatty acid diamine, coconut fatty acid diamine, naphthaline sulfonate, alkyl aryl sulfonate, fatty alcohol polyglycol ether, ethoxylated acetylene alcohols, alkyl compounds containing perfluoroalkyl groups, fluorinated alkylpolyoxyethylene ethanol, potassium fluoroalkyl carboxylate and/or fluorinated alkyl ammonium iodide.

6. Damping medium according to claims 1 or 2, characterized in that it contains 0,5 to 3 % by weight, based on the total weight of the damping medium, of sterically-hindered alkyl phenol, thiophenol or dialkyl selenide, diphenyl amine, phenyl-$\alpha$-naphthyl amine, methylene-4,4'-bis-(2,6-di-tertiary butyl phenol), thiophenyl amine, di-tertiary butyl-p-cresol or trimethyl dihetero-quinoline as an antioxidant for the polyglycoles or carboxylic acid esters.

7. Damping medium according to claims 1 to 6, characterized in that it contains 0,5 to 5 % by weight, based on the total weight of the damping medium, of a polymeric viscosity improver as additional additive, particularly a polyisobutylene, polymethacrylate, polybutene, polybutadiene, polyethylene, polypropylene and/or polystyrene or polytetrafluorethylene.

8. Process for preparing the damping medium according to one of the claims 1 to 7, characterized in that the liquid phase is mixed at a temperature between 40 °C and 100 °C, especially 60 °C and 80 °C, optionally with a wetting agent and optionally with the antioxidant and allowed to swell and then the solid filler substances are admixed in small portions until a homogeneous paste is obtained.

9. Use of the damping medium according to one of the claims 1 to 7 in impact dampers, wheel dampers, steering dampers, seat dampers, engine dampers, machine bed dampers, industrial shock absorbers or industrial vibration dampers.


**Revendications**

1. Agent d'amortissement pâteux destiné à amortir les vibrations mécaniques et/ou acoustiques à base d'une phase liquide constituée par une huile de silicone dont la viscosité est d'au moins 20 mm²/sec à 25 °C, un polyglycol ou un ester d'acide carboxylique aliphatique ou aromatique, saturé, résistant à la chaleur et éventuellement 0,1 à 4 % en poids d'un agent antioxydant, agent caractérisé en ce qu'il contient sous la forme de matière solide finement divisée dont les particules ont une grosseur qui est pour 80 % inférieure à 10 $\mu$, calculé sur le poids total de l'agent d'amortissement, 20 à 80 % en poids d'oxyde d'aluminium, silicate d'aluminium, hydroxyde d'aluminium, phosphate d'aluminium, polyphosphate d'aluminium, cryolithe, phosphate de calcium, fluorure de calcium, oxyde de magnésium, silicate de magnésium, silicate de magnésium-aluminium, sulfure de molybdène, dioxyde de silicium, sillimanite, dioxyde de titane, sulfure de zinc, kaolin et/ou pyrophosphate de zinc.

2. Agent d'amortissement suivant la revendication 1, caractérisé en ce que la matière solide, ou le mélange de matières solides, y est présent dans la proportion de 30 à 70 % en poids, calculé sur le poids total de cet agent d'amortissement.

3. Agent d'amortissement suivant l'une des revendications 1 et 2, caractérisé en ce que la grosseur des particules des matières solides se situe, pour 80 % à moins de 5 $\mu$ en particulier pour 80 % à moins de 3 $\mu$.

4. Agent d'amortissement suivant la revendication 1, caractérisé en ce qu'il contient en supplément un agent mouillant d'environ 0,1 à 4 % en poids calculé sur le poids total de l'agent d'amortissement.

5. Agent d'amortissement suivant l'une des revendications 1 ou 4, caractérisé en ce qu'il contient 0,5 à 2 % en poids d'un agent mouillant ou d'un agent élevant l'activité tensio-active, l'agent mouillant étant en particulier un sel aminé de l'acide oléique, de l'acide linoléique, de l'acide palmitique et/ou stéarique, d'une diamine de l'acide gras du suif, une diamine de l'acide gras de l'huile de coprah, un sulfonate de la naphtaline, un sulfonate d'alcoylaryl, un polyglycoléther d'alcool gras, des alcools d'acétylène éthoxylés, des composés alcoyle contenant des groupes perfluoralcoylés, un polyoxyéthylène éthane d'alcoyle fluoré, un fluoralcoyl carboxylate de potassium, et/ou un iodure d'alcoylammonium fluoré.

6. Agent d'amortissement suivant l'une des revendications 1 et 2, caractérisé en ce qu'il contient, comme agents oxydants pour les polyglycols ou les esters d'acides carboxyliques, 0,5 à 3 % en poids calculé sur le poids total de l'agent amortissant, des alcoylphénol, thiophénol ou de dialcoylséléniure, diphényl-amine, phényl-$\alpha$-naphtylamine, méthylène-4,4'-bis-(2,6-di-tert. -butyl-phénol), thiophénylamine, di-tert. -butyl-p-crésol ou triméthyldihétéro-quinoléine présentant un encombrement stérique.

7. Agent d'amortissement suivant l'une quelconque des revendications 1 à 6, caractérisé en ce qu'il contient comme améliorant de la viscosité, 0,5 à 5 % en poids d'un polymère calculé sur le poids total de l'agent amortissant, constituant un additif supplémentaire, cet améliorant de la viscosité étant en particulier un polyisobutylène, polyméthacrylate, polybutène, polybutadiène, polyéthylène, polypropylène et/ou polystyrène ou polytétrafluoréthylène.

8. Procédé pour la préparation de l'agent amortissant suivant l'une des revendications 1 à 7, caractérisé en ce que l'on mélange la phase liquide à des températures de 40 à 100 °C en particulier de 60 à 80 °C, éventuellement avec l'agent mouillant et éventuellement avec l'agent anti-oxydant et laisse gonfler puis ajoute au mélange par petites portions les matières solides et charges jusqu'à obtention d'une pâte homogène.

9. Utilisation de l'agent amortissant suivant une des revendications 1 à 7 dans les amortisseurs de chocs, des roues, de la direction, des sièges, du moteur, des fixations de machines, des chocs ou des vibrations dans l'industrie.

F (Kraft)

FIG. 1

s (Weg)

F (Kraft)

FIG. 2

s (Weg)

1